# EUROPÄISCHE PATENTSCHRIFT

(11) **EP 2 776 241 B1**
(45) Veröffentlichungstag und Bekanntmachung des Hinweises auf die Patenterteilung: **04.01.2017**
(21) Anmeldenummer: 12779082.2
(22) Anmeldetag: 02.11.2012
(51) Int. Cl.: B32B 7/12, B32B 21/04, B32B 21/06, B32B 21/08, B32B 21/13, B27D 5/00, B27N 7/00

(54) **MEHRSCHICHT-KANTENVERKLEBUNG**
MULTIPLE-LAYER EDGEBANDING
COLLAGE DE CHANTS MULTICOUCHE

(30) Priorität: 09.11.2011 DE 102011085996
(43) Veröffentlichungstag der Anmeldung: 17.09.2014
(73) Patentinhaber: Henkel AG & Co. KGaA, 40589 Düsseldorf (DE)
(72) Erfinder: MORGENEYER, Thomas, 73441 Bopfingen (DE); PIELERT, Lutz, 99092 Erfurt (DE); LOTZ, Jürgen, 65399 Kiedrich (DE)
(86) Internationale Anmeldenummer: PCT/EP2012/071676
(87) Internationale Veröffentlichungsnummer: WO 2013/068298

(56) Entgegenhaltungen:
- EP-A1- 0 744 260
- EP-A1- 1 384 559
- WO-A1-02/24421
- WO-A2-2009/077865
- DD-A1- 240 523
- DE-C1- 19 907 939
- GB-A- 1 489 814
- US-A1- 2004 247 917
- DATABASE WPI Week 200172 Thomson Scientific, London, GB; AN 2001-619837 XP002690859, & JP 2001 146583 A (SEKISUI CHEM IND CO LTD) 29. Mai 2001 (2001-05-29)

## Beschreibung

Die Erfindung betrifft einen Verbund aus einem Formkörper und einem folienförmigen zweiten Substrat, wobei der Formkörper mit einer vernetzten Beschichtung versehen ist, die direkt nach der Herstellung bearbeitet werden kann, und danach mit einer zweiten Klebstoffschicht mit dem zweiten Substrat verklebt wird. Weiterhin wird ein Verfahren zum Herstellen solcher Klebstoffverbunde beschrieben.

Die DE 19728556 beschreibt die Verwendung von thermoplastischen Massen zum Ausfüllen von Poren in Holzwerkstoffen. Dabei soll der Erweichungspunkt von 140 bis 240°C betragen, wobei die Masse mittel- oder hochkristallin ist. Es werden thermoplastische Massen beschrieben.

Die DE 4311830 beschreibt ein Verfahren zum Ummanteln von Kanten von Holz- oder Spanplatten, wobei diese mit einem Klebstoff aufgeklebt werden. Als Klebstoffe werden EVA, Polyamid-Klebstoffe oder PVAc-Klebstoffe beschrieben. Es handelt es sich um thermoplastische Schmelzklebstoffe oder Dispersionsklebstoffe. Zusätzlich sollen an den Kanten Dichtstoffe eingesetzt werden, wobei solche auf Basis von Polysiloxan, Polyurethan oder Epoxidharzen beschrieben werden. Solche reaktiven Systeme benötigen zur ausreichenden Vernetzung eine Reaktionszeit, die üblicherweise mehr als 24 Stunden betragen kann.

Die DE 19630270 beschreibt ein Verfahren zur Vergütung von Holzwerkstoffen, wobei die Oberfläche mit Beschichtungsmaterial behandelt wird auf Basis von Polyurethanen, Polyestern, Polymethacrylaten oder Epoxiden, wobei es sich um vernetzbare Systeme handelt, die bei einem beheizbaren Metallblock geglättet und gehärtet werden.

Die WO 98/15586 beschreibt die Verwendung von 2K-Polyurethansystemen zur Formgebung von Spanplatten, Faserplatten oder Sperrholzplatten. Das reaktive 2K-System soll eine hohe Viskosität von 150 bis 350 Pas aufweisen oder es muss einen schnellen Thixotropieaufbau zeigen. Solche Polyurethansysteme brauchen eine erhebliche Reaktionszeit zur Vernetzung oder sie werden durch erhöhte Temperatur beschleunigt ausgehärtet.

In der WO 2009/077865 werden NCO-freie Zusammensetzungen als Schmelzklebstoff beschrieben, die strahlenhärtbar sind. Die Beschichtungsmittel können auch Füllstoffe wie beispielsweise Siliziumdioxid enthalten. Als Anwendungsgebiete werden Überzugsschichten für Möbel, Parkett, Paneele, Türen und ähnliche Materialien beschrieben. Es werden auch Überzüge auf Holz, Plastik, Glas, Furnier oder textilen Untergründen beschrieben. Insbesondere werden Schichtstärken unter 200 µm eingesetzt.

Die DD 240 523 A1 beschreibt einen Verbund von Formkörpern aus Holzwerkstoffen (Spanplatte) mit folienförmigen Substraten.

Es ist bekannt, dass in der verarbeitenden Industrie häufig Holzwerkstoffe, beispielsweise auf Basis von Spanplatten, MDF-Platten, Holz usw. dauerhaft mit anderen Substraten verklebt werden. Dabei sollen einerseits feste und witterungsbeständige Klebeverbunde erhalten werden, ein anderes Problem ist die Anforderung, dass möglichst glatte und homogene Oberflächen erhalten werden sollen. Dabei ist es bekannt, dass Fehler im Trägersubstrat häufig auf den verklebten Substraten, beispielsweise auf Folien, abgebildet werden.

Um eine gute Verbindung und gleichzeitig eine hochwertige Oberfläche zu erhalten, ist es bekannt, dass verschiedene flüssige oder Schmelzklebstoffmassen auf das Trägersubstrat aufgebracht werden können. Thermoplastische Materialien haben jedoch den Nachteil, dass sie abkühlen müssen und in der Wärme gegebenenfalls aufweichen und ihre Verklebungseigenschaften ändern. Die bekannten reaktiven 1- oder 2-K-Systeme auf Basis von Polyurethanen oder Epoxiden haben den Nachteil, dass sie eine Vernetzungsreaktion als Additionsreaktion erfordern. Solche Additionsreaktionen sind mit einem Katalysator zu beschleunigen oder es wird die zu vernetzende Masse erwärmt. Dabei kann eine Erwärmung das Substrat schädigen. Wird auf diesen Schritt verzichtet, ist eine Aushärtung solcher vernetzenden Systeme langwierig, sie braucht üblicherweise über 24 Stunden. Werden sehr schnell reagierende Systeme eingesetzt, ergibt sich in der Praxis die Schwierigkeit, dass diese eine kurze Topfzeit aufweisen, sie können also nur kurzzeitig verarbeitet werden, danach sind die Klebstoffe nicht mehr geeignet und auch die Auftragsgeräte müssen dann sorgfältig gereinigt werden.

Es ist allgemein bekannt, dass strahlenvernetzende Systeme auf Basis von ungesättigten monomeren oder oligomeren Verbindungen bei ausreichender Bestrahlung schnell vernetzen. Solche Materialien erzeugen häufig eine klare Oberfläche, so dass sie als Lack und Beschichtungsmittel eingesetzt werden. Ein Nachteil solcher Materialien besteht jedoch darin, dass sie häufig nur in dünnen Schichten aufgetragen werden können, weil anderenfalls eine ausreichende Vernetzung durch Strahlung nicht möglich ist. Ohne eine ausreichende Vernetzung ist es jedoch nicht möglich, die geforderten Eigenschaften an Festigkeit für die Weiterverarbeitung zu erzeugen.

Aufgabe der vorliegenden Erfindung ist es deswegen einen Verbundgegenstand und ein Verfahren zur seiner Herstellung zur Verfügung zu stellen, wobei der Gegenstand auf einem Trägermaterial eine Oberflächenschicht aufweist, die schnell vernetzt und eine ausreichende Härte entwickelt, so dass sie schnell weiterverarbeitet und formgebend bearbeitet werden kann. Weiterhin sollen dabei gesundheitlich bedenkliche Substanzen, beispielsweise monomere Isocyanate oder Lösemittel, vermieden werden. Zusätzlich muss diese Schicht mit einem Klebstoff mit einem folienförmigen Substrat verklebt sein, wobei eine möglichst temperatur- und feuchtigkeitsstabile Verklebung hergestellt werden soll. Dabei sollen die Verarbeitungsschritte möglichst rasch durchzuführen sein, um eine in-line Fertigung zu ermöglichen.

Die Aufgabe wird gelöst durch Bereitstellen eines Verbunds aus Formkörpern aus Holzwerkstoffen und folienförmigen Substraten, wobei eine Oberfläche des Formkörpers mit einer ersten Schicht aus einem vernetzten UV-härtenden Schmelzklebstoff beschichtet ist, diese Schicht mit einer zweiten Klebstoffschicht eines Schmelzklebstoffs bedeckt ist und diese mit einem folienförmigen Substrat verklebt ist.

Ein weiterer Gegenstand der Erfindung ist ein Verfahren zur Herstellung solcher Verbundkörper, wobei eine schnelle Abfolge der verschiedenen Arbeitschritte möglich ist. Ein weiterer Gegenstand der Erfindung ist die Verwendung von pigmentierten strahlenvernetzenden Schmelzklebstoffzusammensetzungen als Grundierung von porösen oder mechanisch weniger stabilen Holzwerkstoffen zum Erzeugen von zur Verklebung geeigneten Substratoberflächen.

Der Verbundkörper umfasst zwei verschiedene Substrate, einen Formkörper aus Holz oder Holzwerkstoffen und ein flexibles folienförmiges Substrat. Dabei können als erstes Substrat formstabile Formkörper eingesetzt werden. Diese können aus Holz, Holzwerkstoffen, wie Spanplatten, Sperrholz, MDF- oder OSB-Platten und Faserplatten, bestehen, es kann sich auch um Formkörper aus mehreren unterschiedlichen Materialien handeln. Eine Vorbehandlung der Substratoberfläche ist nicht notwendig. Diese sollte aber vorzugsweise frei von staubförmigen Partikeln und fettfrei sein. Sie kann auch schon mechanisch bearbeitet sein. Häufig weisen diese bearbeiteten Formkörper eine poröse Oberfläche auf. Als zweites Substrat werden flexible Substrate eingesetzt. Es kann sich dabei insbesondere um flexible folienförmige Substrate aus Holz, Papier oder Kunststoff handeln, wie Furniere, Folienbeschichtungen oder Kantenumleimer, beispielsweise Furnierfolien, Kunststoffbänder oder Kunststofffolien. Diese können auch bedruckt, geprägt oder beschichtet sein, es können auch mehrschichtige Substrate eingesetzt werden.

Auf den Formkörper wird zumindest teilweise eine erste Schicht aus einem strahlenvernetzenden Klebstoff aufgetragen. Der erfindungsgemäß geeignete erste Klebstoff ist bei Raumtemperatur (25°C) fest. Es soll bei höheren Temperaturen schmelzen, beispielsweise bei ca. 80 bis 150°C. Weiterhin sollte der Klebstoff vorzugsweise mehrere Verbindungen enthalten, die ungesättigte, durch aktinische Strahlung vernetzbare Gruppen enthalten. Über Menge der Gruppen und über die Anzahl pro Molekül kann die Vernetzungsdichte beeinflusst werden. Erfindungsgemäß ist es zweckmäßig, dass der Klebstoff nicht über Polyaddition oder Polykondensation vernetzt. Diese sind nicht für eine schnelle Vernetzung geeignet.

Der erfindungsgemäß geeignete Klebstoff zur Verklebung der vorbereiteten Oberflächen der Formkörper ist ein strahlenvernetzbarer Schmelzklebstoff, der frei von Isocyanat-Gruppen sein soll. Er besteht vorzugsweise aus einer Polymerkomponente, einer Oligomerkomponente und/oder einer Monomerkomponente, wobei jede dieser Komponenten mindestens eine funktionelle Gruppe aufweisen muss, die durch Strahlung polymerisierbar ist. Zusätzlich enthält der Schmelzklebstoff mindestens einen Photoinitiator, er kann auch noch weitere zusätzliche Additive und Hilfsstoffe enthalten. Insbesondere ist es zweckmäßig, wenn der Schmelzklebstoff auch Pigmente und/oder Füllstoffe enthält.

Ein erfindungsgemäß geeigneter Klebstoff enthält mindestens eine Polymerkomponente, die ein Molekulargewicht (M_{N}, zahlenmittleres Molekulargewicht, wie über GPC zu bestimmen) von mehr als 2000 g/mol besitzt. Insbesondere soll das Polymer ein M_{N} über 5000 aufweisen, bevorzugt unter 100000 g/mol. Die Polymerkomponente soll Polyurethan- und Poly(meth)acrylat-Segmente enthalten und zusätzlich mindestens eine funktionelle Gruppe, die unter UV-Strahlung vernetzbar ist. Die Polymerkomponente kann aus einem Gemisch von strahlenvernetzbaren Polyurethanen und Poly(meth)acrylaten bestehen, es ist jedoch auch möglich, dass diese chemisch verbunden sind und als vernetzbares Blockcopolymer vorliegen.

Der Block oder das Polymer, das Polyurethan-Gruppen aufweist, kann aus den üblichen in der PU-Chemie bekannten Rohstoffen hergestellt werden. Es handelt sich dabei beispielsweise um aliphatische oder aromatische Polyisocyanate, insbesondere Diisocyanate, die mit Polyolverbindungen umgesetzt werden.

Geeignete Polyole für solche Polyurethangerüste haben ein Molekulargewicht von 400 bis 10000 g/mol, Beispiele dafür sind Polyetherpolyole oder Polyesterpolyole. Polyesterpolyole können beispielsweise durch Umsetzung von Dicarbonsäuren mit Diolen hergestellt werden, beispielsweise aliphatischen, aromatischen oder ungesättigten Di- oder Tricarbonsäuren, Dimerfettsäuren, wobei die Carbonsäuren 2 bis 36 C-Atome aufweisen sollen. Beispiele für Alkohole sind niedrig-molekulare Alkohole mit einem Molekulargewicht unter 1000 g/mol, beispielsweise aliphatische, cycloaliphatische, verzweigte oder aromatische Diole. Es können auch Polyoxyalkylendiamine eingesetzt werden, die beispielsweise unter dem Handelsnamen Jeffamine bekannt sind.

Als Polyetherpolyole können die Umsetzungsprodukte von mehrfunktionellen Alkoholen mit Ethylenoxid, Propylenoxid und/oder Butenoxid eingesetzt werden. Insbesondere sind Diole, wie Ethylenglykol, Propylenglykol, Butandiole oder Hexandiole geeignet. Es können Homo-, gemischte oder Blockcopolymere aus bevorzugt Ethylenoxid oder Propylenoxid eingesetzt werden. Es sind auch zumindest anteilsweise die Umsetzungsprodukte trifunktioneller Alkohole wie Glycerin, Trimethylolethan und/oder Trimethylolpropan geeignet. Besonders geeignet sind Polyetherpolyole mit einem Molekulargewicht von 500 bis 10 000 g/mol, vorzugsweise 500 bis 5 000 g/mol. Es können - je nach gewünschtem Molekulargewicht - Anlagerungsprodukte von nur wenigen Mol Ethylenoxid und/oder Propylenoxid pro Mol oder aber von mehr als hundert Mol Ethylenoxid und oder Propylenoxid an niedermolekulare mehrfunktionelle Alkohole eingesetzt werden.

Aus entsprechenden Ausgangsmaterialien werden durch Umsetzung mit einem Überschuss an Isocyanaten NCO-haltige PU-Prepolymere hergestellt, die dann mit Verbindungen umgesetzt werden, die eine strahlenvernetzbare Gruppe aufweisen und zusätzlich eine mit der Isocyanat-Gruppe reaktive Gruppe. Beispiele für solche Verbindungen sind hydroxy-, amin- oder thiofunktionalisierte (Meth)acrylate, Vinylether oder Vinylsilane.

Das zweite Polymere oder Block besteht aus Poly(meth)acrylaten. Diese können linear oder verzweigt sein, wobei die Glasübergangstemperatur (T_{g}, bestimmt über DTA nach DIN 53765) zwischen -48° bis 105° C betragen soll, insbesondere zwischen 15 bis 85° C. Diese Polymere können durch Copolymerisation von Alkyl(meth)acrylat-Monomeren hergestellt werden. Beispiele dafür sind Ester der (Meth)acrylsäure mit C₁ bis C₁₂ Alkoholen. Weitere geeignete Monomere sind (Meth)acrylsäureester mit Ethylenglycol- oder Propylenglycolethern. Es können auch Comonomere auf (Meth)acrylat-Basis eingesetzt werden, die zusätzlich Epoxid-, Amin- oder bevorzugt OH- oder COOH-Gruppen aufweisen.

Verfahren zur Herstellung solcher Poly(meth)acrylate sind allgemein bekannt, beispielsweise durch radikalische Polymerisation in Lösemitteln, als Emulsion oder Suspension oder in Substanz. Es ist möglich, diese Poly(meth)acrylate durch Polymer-analoger Reaktion mit ungesättigten funktionellen Gruppen zu versehen, die für eine spätere Strahlenvernetzung geeignet sind.

Die strahlenvernetzbaren PU-Polymere und Poly(meth)acrylat-Polymere können nach ihrer Herstellung miteinander gemischt werden. Es ist jedoch auch möglich, dass sie vor der Funktionalisierung mit den ungesättigten Gruppen miteinander gemischt werden. Außerdem ist es beispielsweise möglich, dass OH-Gruppen der Polyacrylate mit noch vorhandenen Isocyanat-Gruppen reagieren, das führt zu Blockcopolymeren. Diese werden danach mit den erfindungsgemäß notwendigen strahlenvernetzbaren Gruppen funktionalisiert. Besonders geeignet sind Blockcopolymere mit PU und Poly(meth)acrylat-segmenten. Bevorzugt sollen die Polymere zwei bis sechs strahlenreaktive Gruppen enthalten.

Ein erfindungsgemäßer Schmelzklebstoff kann außerdem eine oligomere Komponente enthalten. Oligomere Komponenten haben ein M_{N} von 500 bis 5000 g/mol und tragen mindestens zwei strahlenvernetzbare funktionelle Gruppen, bevorzugt 2 bis 6 funktionelle Gruppen. Bevorzugte reaktive Gruppen sind Acrylat- oder Methacrylat-Gruppen. Es kann sich dabei um bekannte Urethanacrylate, Polyesteracrylate, Epoxyacrylate, Melaminacrylate usw. handeln oder Gemische davon. Bevorzugt sind insbesondere Epoxyacrylate oder Polyesteracrylate. Solche oligomeren Komponenten sind kommerziell erhältlich. Es ist bevorzugt, dass diese eine hohe Funktionalität aufweisen und beispielsweise mehr als zwei ungesättigte Gruppen enthalten. Das führt zu einer erhöhten Vernetzungsdichte der vernetzten Schichten.

Der erfindungsgemäße Schmelzklebstoff kann außerdem monomere Komponenten enthalten, die nur eine ungesättigte Gruppe aufweisen. Diese haben ein Molekulargewicht von 100 bis 1000 g/mol. Es kann sich dabei um die bekannten mono-(Meth)Acrylat-derivate handeln, beispielsweise Ester der (Meth)acrylsäure mit einwertigen Alkoholen. Es sind auch aliphatische, cycloaliphatische und/oder aromatische Alkohole mit einer OH-Gruppe, einseitig veretherten Polyethylen-, Polypropylen-, Polybutylenglykolen geeignet. Auch Ester mit aliphatischen Alkoholen, die im Alkylrest noch eine weitere OH-Gruppe tragen, sind geeignet. Besonders geeignet sind Umsetzungsprodukte auf Basis von Polyetherpolyolen mit (Meth)acrylsäuren mit einem Molekulargewicht (M_{N}) von 200 bis 1000g/mol.

Bevorzugt können die Acrylat-Oligomere oder -Monomere zusätzlich auch polare Gruppen enthalten, beispielsweise COOH oder insbesondere OH-Gruppen.

Ein erfindungsgemäß geeigneter Schmelzklebstoff kann noch weitere Additive aufweisen. Es handelt sich dabei beispielsweise um Wachse, Harze, Haftvermittler, Stabilisatoren, Antioxidantien, Photoinitiatoren, Verlaufsvermittler, Farbstoffe, Pigmente, Weichmacher oder andere bekannte Hilfsstoffe.

In dem strahlungsvernetzbaren Klebstoff sind erfindungsgemäß photoreaktive Stoffe enthalten. Es können dabei 0,02 bis 5 Gew.-% wenigstens eines Photoinitiators, Photosensibilisators und/oder Reglermoleküls zugesetzt werden. Im bevorzugten Falle der Bestrahlung mit UV-Strahlung ist mindestens ein Photoinitiator in der Menge von 0,1 Gew.-% bis 3 Gew.-% in dem erfindungsgemäßen Beschichtungsmittel enthalten. Im Rahmen der vorliegenden Erfindung sind grundsätzlich alle handelsüblichen Photoinitiatoren geeignet, die mit dem erfindungsgemäßen Beschichtungsmittel kompatibel sind, d. h. weitgehend homogene Gemische ergeben. Es können sowohl photofragmentierende Initiatoren eingesetzt werden oder kationische Initiatoren. Diese sollen eine Vernetzung der erfindungsgemäßen Beschichtung unter Bestrahlung bewirken.

Zugesetzte Harze bewirken eine zusätzliche Klebrigkeit und verbessern die Verträglichkeit der Komponenten. Sie werden in einer Menge von 0 bis 40 Gew.-%, bevorzugt bis 20 Gew.-%, eingesetzt. Gegebenenfalls können dem Klebstoff Wachse zugesetzt werden Die Menge soll von 0 bis 20 Gew.-% betragen, insbesondere von 0 bis 10 Gew.-%. Das Wachs kann natürlichen, chemisch modifizierten oder synthetischen Ursprungs sein. Weichmacher könne ebenfalls enthalten sein. Die Menge beträgt bis 20 Gew.-%, vorzugsweise von 0 bis 10 Gew.-%. Geeignete Weichmacher sind Öle, Ester von Carbonsäuren oder Kohlenwasserstoffe.

Als Füllstoffe und/oder Pigmente geeignet sind nicht reaktive, feinteilige anorganische Mineralien, diese können gemahlen, gefällt oder an ihrer Oberfläche behandelt sein. Beispiele sind Kreide, beschichtete Kreide, Kalkmehl, Calcium-Magnesium-Carbonate, Aluminiumoxide und -hydroxide, Kieselsäure, Quarz, Titandioxid, Bariumsulfat, Natrium- oder Aluminiumsilikate, Zeolithe, Bentonite, Glas, gemahlene Mineralien, soweit diese als Pulver vorliegen. Die Korngröße soll zwischen 1 bis 500 µm betragen, insbesondere zwischen 3 bis 200 µm. Auch nanoskalige Füllstoffe, beispielsweise auf SiO₂ oder TiO₂-Basis, können eingesetzt werden. Auswahl und Menge sind so zu bemessen, dass die notwendige strahlungsinduzierte Reaktion nicht beeinträchtigt wird. Die Menge der Pigmente soll von 10 bis 50 Gew.-% der Zusammensetzung betragen, insbesondere 20 bis 40 Gew.-%. Dabei sind insbesondere transparente Füllstoffe geeignet, beispielsweise Quarz, Feldspat oder Nephelin-haltige Mineralien, es kann auch die Strahlenempfindlichkeit des Initiators auf den Füllstoff abgestimmt werden.

Zu im Rahmen der Erfindung als Zusatzstoffe einsetzbaren Stabilisatoren, insbesondere UV-Stabilisatoren, oder Antioxidantien, zählen Phosphite, Phenole, sterisch gehinderte Phenole hohen Molekulargewichts, polyfunktionelle Phenole, schwefel- und phosphorhaltige Phenole oder Amine.

In geringen Mengen bis maximal 10 Gew.-% können dem erfindungsgemäßen Schmelzklebstoff auch weitere nicht reaktive thermoplastische Polymere zugesetzt werden. Diese weiteren Polymere können Eigenschaften des Beschichtungsmittels beeinflussen, wie Kohäsion, Viskosität, Haftung, Elastizität. Es kann sich um dem Fachmann bekannte Polymere handeln, wie Polyacrylate oder nicht reaktive Polyolefine und Copolymere.

Eine besonders geeignete Klebstoffzusammensetzung enthält 60 bis 95 Gew.-% Polyether- und/oder Polyesterpolymere mit mindestens einer ungesättigten Gruppe, 5 bis 40 Gew.-% Oligomere und/oder Monomere mit strahlenvernetzbaren Gruppen, 0,1 bis 20 Gew.-% Additive, insbesondere Photoinitiatoren, sowie 10 bis 40 Gew.-% Füllstoffe/Pigmente. Dabei soll die Summe der Bestandteile 100 Gew.-% ergeben. Dabei können die oben genannten besonders geeigneten Rohstoffe einzeln oder gemeinsam ausgewählt werden.

Aus den oben genannten Bestandteilen kann ein erfindungsgemäßer Schmelzklebstoff durch bekannte Verfahren hergestellt werden. Die Bestandteile werden vorzugsweise so ausgewählt, dass der Klebstoff eine Viskosität von 1000 bis 20000 aufweist bei einer Temperatur von 130°C, insbesondere von 2000 bis 10000 mPas bei 80 bis 120 °C. Die Viskosität ist hier, wie auch im Folgenden, diejenige, die mit einem Viskosimeter des Typs Physica Rheolab MC 1 bestimmt wird und zwar unter Verwendung einer Platte/Platte-Anordnung mit 0,2 mm Spalt und einer Scherrate von 20 s⁻¹. Insbesondere sind strahlenvernetzbare Klebstoffe geeignet, die ein strahlenvernetzbares Polymersystem enthalten, wie in der WO 2009/077865 beschrieben.

Ein Gegenstand der Erfindung betrifft also die Verwendung von solchen geeigneten strahlenvernetzbaren pigmentierten Schmelzklebstoffen zum Verfestigen oder Vorbeschichten von Holzwerkstoffoberflächen zum Verkleben mit flexiblen Substraten.

Der erfindungsgemäß einsetzbare strahlenvernetzbare Schmelzklebstoff wird als Oberflächenbeschichtung für den Formkörper eingesetzt. Dabei kann dieser auf eine oder mehrere Substratflächen aufgetragen werden, die mit einem zweiten Substrat verklebt werden sollen. Es ist notwendig, dass der Schmelzklebstoff durch Aufschmelzen auf eine geeignete Viskosität gebracht wird. Diese wird so ausgewählt, dass ein Eindringen in die poröse Oberfläche möglich ist. Beschichtungsverfahren für solche Substrate und Klebstoffe sind dem Fachmann bekannt. Das kann beispielsweise durch Extrusion durch eine Schlitzdüse, durch Walzenauftrag oder durch Rakel geschehen, insbesondere wird der Klebstoff als Schmelze durch eine Düse in die Oberfläche mit Druck aufgetragen. Wird die Viskosität zu dünn eingestellt, versinkt der Klebstoff in den Hohlräumen, Poren des Holzwerkstoffs; es wird keine glatte Oberfläche erhalten. Wird die Viskosität zu hoch eingestellt, wird nur die Oberfläche beschichtet, ohne dass eine Verankerung in dem Holzwerkstoff erhalten wird. Es ist vorteilhaft, wenn die Schmelze eine Schicht auf und in den Poren und Hohlräumen bildet, bevor sie erstarrt. Die Schichtdicke der Klebstoffbeschichtung soll bis zu 5 mm betragen, bevorzugt 1 bis zu 4 mm. Dabei dringt das strahlenvernetzbare Beschichtungsmittel auch in die Poren der Oberfläche ein.

Nach dem Auftragen ist es gegebenenfalls auch möglich, dass die aufgetragene Schicht zusätzlich geglättet wird. Unmittelbar nach dem Auftrag wird die Schicht durch Bestrahlen vernetzt. Das kann mit an sich bekannten Vorrichtungen geschehen, insbesondere ist UV-Strahlung geeignet. Die Bestrahlung soll für einen Zeitraum von 0,3 sec. bis 15 sec. durchgeführt werden, insbesondere bis 10 sec. Die Bestrahlungsmenge hängt auch von der Intensität des Strahlers und seiner Entfernung von der zu vernetzenden Schicht ab. Im Rahmen dieser Erfindung ist die Vernetzung durch UV-Strahlung bevorzugt. Die Bestrahlung des erfindungsgemäßen Beschichtungsmittels mit UV-Strahlung findet insbesondere bei einer Wellenlänge im Bereich von 200 nm bis 450 nm statt. Die Erzeugung der UV-Strahlen erfolgt durch bekannte Vorrichtungen. Insbesondere sind jedoch UV-LED Strahler geeignet, die eine monochromatische UV-Strahlung erzeugen. Dabei kann eine hohe Strahlendichte und eine gute Vernetzung in der Schichttiefe sichergestellt werden.

Nach dem Vernetzen der Beschichtungsmittelschicht kann diese mechanisch bearbeitet werden., sodass diese erste Schicht des vernetzten strahlenhärtenden Schmelzklebstoff profiliert und/oder geformt ist. Die Härte als Shore-Härte D (DIN 53505) soll über 50 betragen. Dabei können die bekannten Verfahren, wie Fräsen, Schleifen oder Polieren eingesetzt werden. Die mechanische Bearbeitung erzeugt Wärme, diese führt aber nicht zu einer Beeinträchtigung der vernetzten Schicht, es werden auch die Werkzeuge nicht verklebt und beeinträchtigt. In diesem Verfahrensschritt wird die zu verklebende Oberfläche in die beabsichtigte Form gebracht. Dieser Verfahrensschritt kann unmittelbar nach der Vernetzung der Klebstoffschicht erfolgen. Die Oberfläche kann falls erforderlich danach von Staub und Partikeln gereinigt werden.

Auf die im ersten Verfahrensschritt vorbearbeitete Oberfläche des Formkörpers wird im erfindungsgemäßen Verfahren ein zweiter Schmelzklebstoff aufgebracht. Es handelt sich dabei um vernetzende oder nicht-vernetzende Schmelzklebstoffe. Solche Schmelzklebstoffe sind bekannt, es können viele unterschiedliche Typen eingesetzt werden, solange eine ausreichend stabile Verklebung erhalten wird. Beispiele für nicht-vernetzende Schmelzklebstoffe sind solche, die ein nicht-reaktives, festes Polymer enthalten, beispielsweise Polyester, Polyacrylate, EVA oder Polyolefine. Als reaktive Schmelzklebstoffe sind solche geeignet, die physikalisch erstarren und dann über hydrolysierbare Gruppen vernetzen. Es kann sich dabei beispielsweise um Polyurethanklebstoffe mit Silangruppen oder mit NCO-Gruppen handeln. Solche Schmelzklebstoffe können zusätzlich an sich bekannte Additive enthalten, die beispielsweise die Haftung, die Schmelzstabilität, eine Witterungsstabilität oder andere geforderte Eigenschaften des Schmelzklebstoffes beeinflussen.

Insbesondere geeignet zur Herstellung eines erfindungsgemäßen Verbundformkörpers sind NCO-haltige PU-Schmelzklebstoffe, diese weisen eine gute Haftung zu der ersten Schicht und dem zweiten Substrat auf. Dem Fachmann sind solche Schmelzklebstoffe bekannt und sie sind kommerziell erhältlich.

Verfahren zum Auftragen solcher Schmelzklebstoffe sind ebenfalls bekannt. Dabei werden diese Klebstoffe gegebenenfalls unter Feuchtigkeitsausschluss auf eine Temperatur zwischen beispielsweise 80 bis 180° C erwärmt. Dabei schmelzen die Klebstoffe auf und können dann über bekannte Apparaturen beispielsweise durch Rakel-, Düsen- oder Walzenauftrag auf die zu beschichtende Fläche aufgetragen werden. Gemäß dem erfindungsgemäßen Verfahren wird die Klebstoffschicht so gewählt, dass eine Schichtdicke vorzugsweise von 50 bis 500 µm erhalten wird. Unmittelbar nach dem Auftrag wird auf die Klebstoffschicht das zweite Substrat, das flexible Substrat, aufgebracht. Dabei können die Substrate miteinander verpresst werden. Durch das Abkühlen des Schmelzklebstoffes wird die Haftung zwischen beiden Substraten hergestellt. Diese ist auf jeden Fall ausreichend, dass eine weitere Verarbeitung der beschichteten Teile vorgenommen werden kann. Im Falle von reaktiven Schmelzklebstoffen vernetzen diese noch nach, das führt zu einer besonders guten und stabilen Verbindung der beiden Substrate.

Durch die Vorbeschichtung der Formteile auf Basis von Holzwerkstoffen mit dem erfindungsgemäßen ersten strahlenhärtbaren Schmelzklebstoff wird eine Verbesserung im Verarbeitungsprozess erreicht. Durch die schnelle endgültige Aushärtung durch strahlenhärtende Bindemittel wird sichergestellt, dass schnell eine gute mechanische Stabilität der Oberflächen gegeben ist. Das beschichtete Substrat kann danach unmittelbar einer Oberflächenbearbeitung zugeführt werden. Dabei auftretende Prozesswärme führt nicht zu einer Schädigung der Substratoberfläche, Schrumpfungserscheinungen, wie bei thermoplastischen Beschichtungen, werden vermieden. Es hat sich außerdem gezeigt, dass die Haftung des zweiten Schmelzklebstoffs durch die pigmenthaltige erste Schicht verbessert wird. Die Verarbeitungsgeschwindigkeit wird erhöht, da lange Lagerzeiten zur Vervollständigung der bekannten Reaktionen nicht notwendig sind. Es ist eine in-line Beschichtung und Verklebung der Substrate möglich.

Durch die Verwendung eines schnell vernetzbaren strahlenhärtenden Beschichtungsmittels können Unebenheiten und Poren im Untergrund ausgeglichen werden. Eine UV-Vernetzung der Klebstoffschicht ist auch in höherer Schichtdicke möglich. Die erste Schicht weist eine hohe mechanische Stabilität gegen Druck auf. Das zweite Substrat weist nach dem Verkleben eine glatte Oberfläche des Klebstoffverbunds aus Formkörper; Klebstoffschichten und zweitem Substrat auf, auch Fehler im Untergrund werden abgedeckt. Auf dieser ersten Schicht wird eine gute Haftung zu der zweiten Klebstoffschicht erzeugt. Es wird auch bei Lagerung oder bei Belastung durch Feuchtigkeit keine Delaminierung zwischen den einzelnen Schichten beobachtet.

### Klebstoff-Beispiel 1:

Es wurde ein Polyurethan hergestellt aus :
25 g PPG 2000, 5 g gesättigter Polyesterdiol, mit OHZ = 30 Polyester (Dynacoll 7360), 20 g Polyacrylat aus Methylmethacrylat/Butylacrylat Copolymer Molgewicht ca 60000 g/mol (Degalan LP 65/12) zusammen mit 1,5 g Irganox 1010 werden unter Rühren in der Wärme bei 130°C gelöst.

Es wird dann 5 g IPDI zugegeben sowie 0,1 g phosphorige Säure und 0,5 g DBTL und bei ca, 100 bis 110 °C umgesetzt.
NCO-Wert : ca. 1,2%
Viskosität 30000 mPas (bei 110°C)

Es werden dazu 7g OH-funktionellen Acrylatesters (Bisomer HEA) und 6 g eines difunktionellen Acrylatoligomers (Ebecryl 3700) und 12 g tetrafunktionelles Acrylat (Sartomer SR 444) zugesetzt.
NCO-Wert 0

Es werden 30 g gemahlenes Nephelinsyenit zugesetzt, homogenisiert und entgast und flüchtige Bestandteile entfernt.

Es werden dann Irgacure 819 (0,75 g) Additol HDMAP (0,75g) und Stabilisator UV22 (0,2 g) zugemischt.

Das entstehende Produkt besaß eine Viskosität von ca. 15000 mPas (110 °C).
Es enthielt keine Isocyanatgruppen.
Das Molekulargewicht benötigt (MN) ca. 8000 g/mol.
Shore D 70.

### Verfahrensbeispiel 2:

Eine handelsübliche Spanplatte wird an der Schmalseite mit einem Schmelzklebstoff nach Beispiel 1 bei 110 °C beschichtet. Anpressdruck der Düse an die Kante ca. 20 bar, Auftragsmenge ca. 230 g/m².

Es entsteht eine Beschichtung, die ca. 3 mm in die Porenstruktur eingedrungen ist und eine geschlossene Oberfläche bildet.

Unmittelbar danach wir mit einer UV-Lampe (0,9 sec, 200 W/cm) die Klebstoffschicht bestrahlt und vernetzt.
Die gehärtete Schicht wird unmittelbar danach mit einem Fräskopf bearbeitet.

Auf diese Oberfläche wird ein reaktiver PU-Klebstoff (Purmelt RS 270/7) aufgetragen , ca 75 g/ m²) und unmittelbar danach eine PVC-Dünnkante aufgeklebt.

Die Wärmestandfestigkeit der Verklebung beträgt mehr als 150°C.
Die Poren des Untergrunds sind nicht mehr sichtbar.
Die Laufruhe der Oberfläche ist glatter und ruhiger als ein entsprechender Vergleich ohne UV-Beschichtungsmasse.
Die Arbeitsschritte können unmittelbar nacheinander durchgeführt werden.

## Patentansprüche

1. Verbund von Formkörpern aus Holzwerkstoffen mit folienförmigen Substraten, wobei eine Oberfläche des Formkörpers eine erste Schicht aus einem vernetzten strahlenhärtenden Schmelzklebstoff aufweist, diese Schicht mit einer zweiten Klebstoffschicht eines Schmelzklebstoffs bedeckt ist und diese mit einem folienförmigen Substrat verklebt ist.

2. Verbund nach Anspruch 1, **dadurch gekennzeichnet, dass** die erste Schicht des vernetzten strahlenhärtenden Schmelzklebstoff profiliert und/oder geformt ist.

3. Verbund nach Anspruch 1 oder 2, **dadurch gekennzeichnet, dass** der strahlenhärtende Klebstoff ein UV-vernetzender Klebstoff ist, enthaltend 60 bis 95 Gew.-% Polyesterpolymere und/oder Polyetherpolymere mit mindestens einer strahlenhärtenden funktionellen Gruppe, 5 bis 40 Gew.-% Oligomere mit mindestens zwei strahlenhärtenden Gruppen und/oder Monomere mit einer strahlenhärtbaren Gruppe, 0,1 bis 20 Gew.-% Additive, insbesondere Photoinitiatoren.

4. Verbund nach Anspruch 3, **dadurch gekennzeichnet, dass** der UV-vernetzende Klebstoff zusätzlich 10 bis 50 Gew.-% Füllstoffe oder Pigmente enthält, wobei die Summe aller Bestandteile 100 Gew.-% ergeben soll.

5. Verbund nach einem der Ansprüche 1 bis 4, **dadurch gekennzeichnet, dass** die zweite Klebstoffschicht aus einem vernetzten reaktiven PU-Schmelzklebstoff besteht.

6. Verbund nach einem der Ansprüche 1 bis 5, **dadurch gekennzeichnet, dass** der der Holzwerkstoff ausgewählt wird aus Holz, Spanplatten, MDF-Platten und/oder das folienförmige Substrat ausgewählt wird aus Kunststofffolien, Papiersubstraten, Furnierfolien oder Kunststoffumleimern.

7. Verfahren zum Herstellen eines Verbundes nach Anspruch 1 bis 6, umfassend die Schritte - Beschichten einer Oberfläche eines Formkörpers mit einem strahlenhärtbaren Schmelzklebstoff - Vernetzen der Klebstoffschicht mit aktinischer Strahlung, - gegebenenfalls mechanisches Bearbeiten der vernetzten Oberfläche, - Auftragen eines zweiten Schmelzklebstoffs auf die bearbeitete Fläche, - Verkleben des ersten Substrats mit einem folienförmigen Substrat.

8. Verfahren nach Anspruch 7, **dadurch gekennzeichnet, dass** der erste Schmelzklebstoff bei einer Temperatur aufgetragen wird, wobei der Klebstoff eine Viskosität zwischen 1000 bis 20000 mPas aufweist.

9. Verfahren nach einem der Ansprüche 7 oder 8, **dadurch gekennzeichnet, dass** die Schichtdicke des UV-vernetzbaren Klebstoffs von 1 bis 5 mm beträgt und mit UV-Strahlung vernetzt wird.

10. Verfahren nach Anspruch 9, **dadurch gekennzeichnet, dass** die Schicht zwischen 0,3 bis 15 sec. bestrahlt wird mit UV Strahlung, insbesondere durch UV-LED Strahler mit monochromatischer UV-Strahlung.

11. Verfahren nach einem der Ansprüche 8 bis 11, **dadurch gekennzeichnet, dass** die vernetzte erste Schicht unmittelbar nach der Vernetzung in-line bearbeitet werden kann.

12. Verfahren nach einem der Ansprüche 8 bis 11, **dadurch gekennzeichnet, dass** als zweiter Schmelzklebstoff ein NCO-reaktiver PU-Schmelzklebstoff eingesetzt wird.

## Claims

1. A composite consisting of shaped bodies made of wood materials and film-like substrates, wherein a surface of the shaped body comprises a first layer made of a crosslinked, radiation-curing hot-melt adhesive, said layer is covered with a second adhesive layer of a hot-melt adhesive and this layer is bonded to a film-like substrate.

2. The composite according to claim 1, **characterized in that** the first layer of the crosslinked radiation-curing hot-melt adhesive is profiled and/or shaped.

3. The composite according to one of claims 1 or 2, **characterized in that** the radiation-curing adhesive is a UV-crosslinkable adhesive containing from 60 to 95 wt.% polyester polymers and/or polyether polymers having at least one radiation-curing functional group, from 5 to 40 wt.% oligomers having at least two radiation-curing groups and/or monomers having a radiation-curable group, and from 0.1 to 20 wt.% additives, in particular photoinitiators.

4. The composite according to claim 3, **characterized in that** the UV-crosslinkable adhesive additionally contains from 10 to 50 wt.% filler or pigments, it being intended for the sum of all the constituents to total 100 wt.%.

5. The composite according to one of claims 1 to 4, **characterized in that** the second adhesive layer consists of a crosslinked, reactive PU hot-melt adhesive.

6. The composite according to one of claims 1 to 5, **characterized in that** the wood material is selected from wood, particle boards or MDF boards, and/or the film-like substrate is selected from plastics films, paper substrates, veneer films or plastics edge bands.

7. A method for producing a composite according to claims 1 to 6, comprising the steps of:
- coating a surface of a shaped body with a radiation-curable hot-melt adhesive, - crosslinking the adhesive layer by means of actinic radiation, - optionally mechanically machining the crosslinked surface, - applying a second hot-melt adhesive to the machined face, and
- bonding the first substrate to a film-like substrate.

8. The method according to claim 7, **characterized in that** the first hot-melt adhesive is applied at a temperature at which the adhesive has a viscosity of between 1000 and 2000 mPa.

9. The method according to one of claims 7 or 8, **characterized in that** the UV-crosslinkable adhesive has a layer thickness of from 1 to 5 mm and is crosslinked using UV radiation.

10. The method according to claim 9, **characterized in that** the layer is irradiated with UV radiation, in particular with monochromatic UV radiation by a UV-LED radiator, for between 0.3 and 15 seconds.

11. The method according to one of claims 8 to 11, **characterized in that** the crosslinked first layer can be in-line machined directly after being crosslinked.

12. The method according to one of claims 8 to 11, **characterized in that** an NCO-reactive PU hot-melt adhesive is used as the second hot-melt adhesive.

## Revendications

1. Composite de corps mis en forme constitués de matériaux dérivés du bois comprenant des substrats en forme de feuilles, une surface du corps mis en forme comprenant une première couche d'un adhésif fusible réticulé durcissable par rayonnement, cette couche étant recouverte d'une seconde couche d'adhésif fusible et cette couche d'adhésif étant collée à un substrat en forme de feuille.

2. Composite selon la revendication 1, **caractérisé en ce que** la première couche d'adhésif fusible réticulé durcissable par rayonnement est profilé et/ou est conformé.

3. Composite selon la revendication 1 ou 2, **caractérisé en ce que** l'adhésif durcissable par rayonnement est un adhésif réticulable aux UV, contenant 60 à 95% en poids de polymères de polyester et/ou de polymères de polyéther ayant au moins un groupe fonctionnel durcissable par rayonnement, de 5 à 40% en poids d'oligomères comportant au moins deux groupes durcissable par rayonnement et/ou des monomères contenant un groupe durcissable par rayonnement, 0,1 à 20% n poids d'additifs, en particulier de photo-initiateurs.

4. Composite selon la revendication 3, **caractérisé en ce que** l'adhésif réticulable aux UV contient en plus 10 et 50% en poids de charges ou de pigments, la somme de tous les constituants étant de 100% en poids.

5. Composite selon l'une des revendications 1 à 4, **caractérisé en ce que** la seconde couche d'adhésif est constituée d'un adhésif au PU fusible réactif réticulé.

6. Composite selon l'une des revendications 1 à 5, **caractérisé en ce que** le matériau à base de bois est choisi parmi le bois, les panneaux de particules, les panneaux de fibres d'épaisseur moyenne et/ou le substrat en forme de feuille est choisi parmi les films de matière plastique, les substrats de papier, les films de placage ou les baguettes de lisière en matière plastique.

7. Procédé de fabrication d'un composite selon la revendication 1 à 6, comprenant les étapes consistant à - revêtir une surface d'un corps mis en forme avec un adhésif fusible durcissable par rayonnement - réticuler la couche d'adhésif avec un rayonnement actinique, - éventuellement traiter mécaniquement la surface réticulée, - appliquer un second adhésif fusible sur la surface traitée, - coller le premier substrat avec un substrat en forme de feuille.

8. Procédé selon la revendication 7, **caractérisé en ce que** le premier adhésif fusible est appliqué à une température à laquelle l'adhésif a une viscosité comprise entre 1000 et 20000 mPas.

9. Procédé selon l'une des revendications 7 ou 8, **caractérisé en ce que** l'épaisseur de couche de l'adhésif réticulable aux UV est de 1 à 5 mm, et est réticulé par un rayonnement UV.

10. Procédé selon la revendication 9, **caractérisé en ce que** la couche est irradié pendant 0,3 à 15 secondes par un rayonnement UV, en particulier par un émetteur à LED UV avec un rayonnement UV monochromatique.

11. Procédé selon l'une des revendications 8 à 11, **caractérisé en ce que** la première couche réticulée peut être traitée en ligne immédiatement après la réticulation.

12. Procédé selon l'une des revendications 8 à 11, **caractérisé en ce que** le second adhésif fusible est un adhésif de PU fusible réactif au NCO.
